# EUROPEAN PATENT APPLICATION

(11) **EP 0 922 677 A2**
(43) Date of publication of application: **16.06.1999**
(21) Application number: 98122595.6
(22) Date of filing: 04.12.1998
(51) Int. Cl.: C02F 1/42

(54) **Device for the regulation of the quantity of regeneration water supplied to ion-change resins preferably in machines for washing**

(30) Priority: 10.12.1997 IT MI972737
(71) Applicant: T & P S.p.A., 21049 Tradate (Varese) (IT)
(72) Inventor: Borroni, Giuseppe, 21040 Origgio, Varese (IT); Carli, Carlo, 21100 Varese (IT)
(74) Representative: Petruzzelli, Antonio European Patent Attorney

(57) **Abstract**

Device for the regulation of the quantity of water used for the regeneration of ion-exchange resins for the softening of water. The device comprises means for the selection of a pre-defined flow of water to be supplied to said ion-exchange resins for regeneration of the same, and means acting to allow filling of a combination of tanks (40, 42, 44) which can be selected from among a plurality of combinations of tanks (40, 42, 44), each combination comprising one or more of said tanks (40, 42, 44), said means for enabling filling of a combination of tanks (40, 42, 44) comprising a mobile part (64) and a fixed part (62) having reciprocal matching parts such that pre-defined angular positions of the mobile part (64) correspond to a respective combination of discharge, comprising one or more of said tanks (40, 42, 44) such as to form said selected flow of regeneration water. The device comprises means extending peripherally between the peripheral surface of the fixed part (62) and the peripheral surface of the mobile part (64) and acting to push radially and create a seal between the same.

## Description

The present invention relates to a device for the regulation of the quantity of water used for the regeneration of ion-exchange resins for softening water, which device can be used preferably, but not exclusively, in a machine for washing such as a dishwasher.

The regeneration water regulation device being connected to a plurality of tanks for storage and transfer of a respective quantity of water, which tanks can be discharged, in combination one with the other, to form a required flow of water intended for regeneration of said ion-exchange resins.

The present invention aims to provide such a device for the regulation of the quantity of water which has special operating reliability, and in particular does not involve the activation of tanks for containing regeneration water which are not included in the combination of tanks selected for discharge.

The foregoing object is achieved by means of a device which, according to the characterising part of claim 1, comprises means for the selection of a pre-defined flow of water to be supplied to said ion-exchange resins, which can be connected to means acting to enable the filling of a combination of tanks which can be selected from among a plurality of combinations of tanks, each one comprising one or more of said tanks containing water for regeneration, wherein said means for enabling filling of a combination of tanks comprise a fixed part having a peripheral surface and a mobile part having a respective peripheral surface and arranged coaxially to said peripheral surface of the first part, said mobile part being supported rotatingly by said fixed part and connected for its rotation to said selection means, said mobile and fixed parts having reciprocal matching parts so that pre-defined angular positions of the mobile part correspond to a respective feed combination comprising one or more of said tanks so as to form said selected flow of regeneration water, and wherein the fixed part of the device comprises means extending peripherally between said peripheral surface of the fixed part and said peripheral surface of the mobile part and acting to push radially and create a seal between the same.

Due to the fact that said fixed part has elastic means for supporting the fixed part during rotation, which means are above all compressed in a radial direction, a hermetic seal is consequently created between said fixed and mobile parts.

In this way any risk of accidental activation of the tanks not selected for this operation of supplying regeneration water is avoided. The secondary claims refer to special and advantageous embodiments of the present invention.

The features and advantages of the present invention will in any case be made clearer on reading the description which follows, relating to a preferred embodiment of the invention, to be read with reference to the accompanying drawings, in which:
Figure 1 is a schematic perspective view of a dishwasher machine with the regulation device mounted according to a preferred embodiment of the present invention;
Figure 2 is a sectioned view, taken along line 2-2 of Figure 4C, of the preferred embodiment of the device of the present invention;
Figure 3 is a sectioned view, taken along 3-3 of Figure 4C, of the preferred embodiment of the device of the present invention;
Figure 4A is a front view of the externally visible part of the preferred embodiment of the device of the present invention;
Figure 4B is a sectioned view, taken along line 4B-4B of Figure 2, of the preferred embodiment of the device of the present invention;
Figure 4C is a sectioned view, taken along line 4C-4C of Figure 2, of the preferred embodiment of the device of the present invention;
Figure 5 is a front view of only the fixed part of the preferred embodiment of the device of the present invention;
Figure 6 is a sectioned view of said fixed part, taken along line 6-6 of Figure 5;
Figure 7 is a sectioned view of said fixed part, taken along line 7-7 of Figure 6;
Figure 8 is a frontal view of the elastic annular seal element;
Figure 9 is a front view of only the mobile part of the preferred embodiment of the device of the present invention;
Figure 10 is a lateral view of only the mobile part of the preferred embodiment of the device of the present invention;
Figure 11 is a rear view of only the mobile part;
Figure 12 is a sectioned view of only the mobile part, taken along line 12-12 of Figure 11;
Figure 13 is a sectioned view of only the mobile part, taken along line 13-13 of Figure 10.

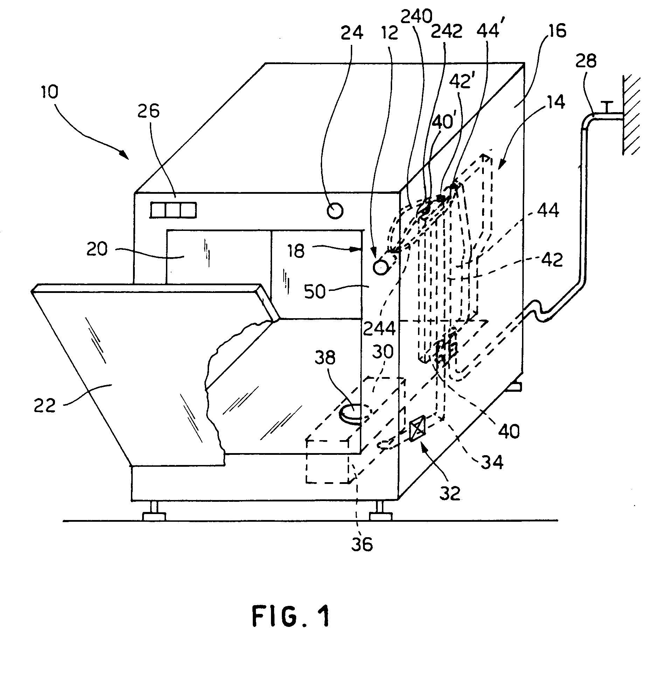

Figure 1 shows a machine for washing, in particular a dishwasher machine 10, using the device 12 for regulation of the quantity of water used for regeneration of ion-exchange resins for softening hard water.

Although the present regulation device has been specifically designed and is preferably used in relation to a dishwasher machine, it must be understood that it can be applied to any other type of device having these softening resins which must be subjected to periodical regeneration to restore the original working state.

The device 12 for regulation of the regeneration flow is connected to a plurality of tanks for feeding for a respective quantity of water which can be filled and discharged to form a required flow of water, intended for regenerating said ion-exchange resins.

Said tanks for containing and feeding the regeneration water are preferably incorporated into one single block 14, in a plastic material, positioned between the external shell 16 of the dishwasher machine and the internal side wall 18 defining the washing tub or space 20 of the machine. 22 in Figure 1 denotes the front closure door (shown partially sectioned), while 24 denotes the timer for selection of the washing programme. 26 denotes additional control buttons, for example for starting up the machine and for other functions.

The dishwasher machine takes the washing water from an external water source 28 and, under the control of the operating programme, feeds into the washing tub the chosen quantity of water, making it flow through the plastic block 14 where, if necessary, it deposits part of the water into said regeneration tanks.

The feeding of water into the tub is performed materially by the opening of the gate valve of a special solenoid valve (not shown) placed on a conduit (not shown in the figure) which takes the washing water from the block 14 to the softening resins, from where said water is discharged without encrusting salts into the washing tub 20.

The dishwasher also has a second solenoid valve 32, actuated periodically by the control programme to open the conduit 34 which connects the tanks of the block 14 to a container of the salts 36 to feed into the latter an appropriate flow of water, which is then made to flow through the resins 30 to purify or regenerate the same and then discharged externally, full of the salts withheld previously by the ion-exchange resins. At this point the resins are once again in a condition to perform purification of the washing water fed into the tub of the machine.

38 in Figure 1 also denotes a cap which can be screwed and removed to allow a fresh supply of regeneration salts into said salts container 36. Said tanks for the regeneration water, in the preferred embodiment shown here, are denoted by respective reference numerals 40, 42 and 44, however a higher or lower number of tanks could also be used.

Said tanks for feeding the regeneration water are filled, according to methods which will be explained better further on, by transfer of the filling water from the washing tub passing through said block 14.

What has been disclosed hitherto, in relation to the preferred embodiment, forms part of the technological background of the expert in the field and it is not therefore necessary to describe it in greater detail.

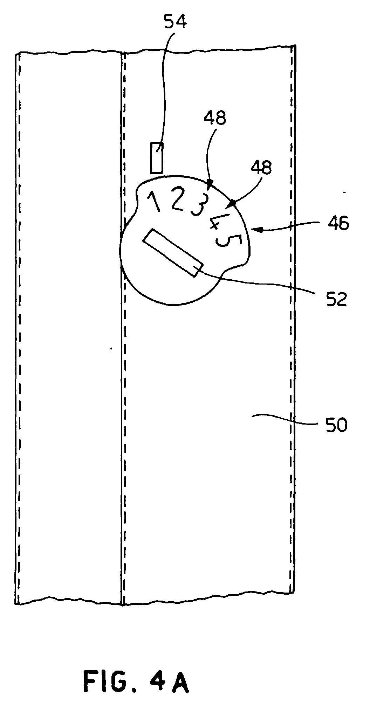

Referring also to the subsequent figures, it can be seen how the regulation device uses appropriate means for selecting a pre-defined flow of water to be supplied to said ion-exchange resins. More particularly this is an actuation portion or plaque 46, shown fully in Figure 4A, which bears, angularly distanced, a series of reference numbers 48, numbered 1 to 5 in the present case, useful for distinguishing the flow of regeneration water to be selected, which plaque is attached to a front portion 50 of the frame of the machine for washing, at the space 14 for housing the block of tanks for the regeneration water.

By using a suitable tool, for example a screwdriver, it is possible, by engaging the rectangular imprint 52 substantially in the centre of the front surface of the plaque 46, to make the same rotate and select a new feed flow. The reference notch 54 on the front face 50 of the frame of the machine indicates, in combination with the numbers 48 on the actuation portion 46, the chosen feed combination.

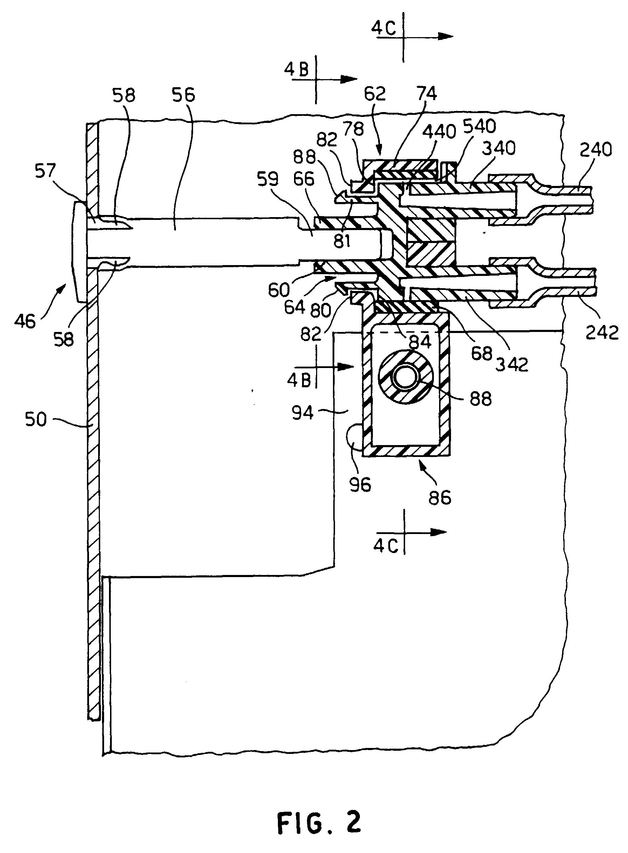

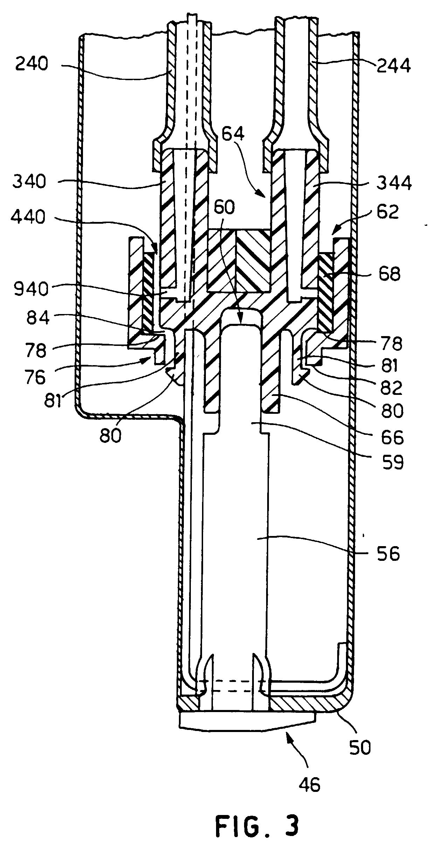

As is clear particularly in Figures 2 and 3, said selection means also comprise a stem 56 integral at one end with said plaque 46 and which can be engaged at the other end with the part to be actuated of the device.

To attach the same selection plaque 46, said stem 56 extends into a hole 57 provided in the front face 50 of the frame and is concealed during use by said plaque 46. The stem 56 also has, at the end of attachment of said selection plaque 46, tabs 58 projecting and extending in a substantially parallel direction to the axis of the stem 56, which tabs can be deformed elastically in an axial direction and engaging on the internal face of the wall 50 around said insertion hole 57 to tighten, in co-operation with the rear surface of the selection plaque 46, the thickness of the wall 50 so as to provide a certain friction on rotation of said selection means.

At the other end, the rotation stem 56 has a reduced section length 59 with an asymmetric profile suitable for inserting, by restraining, in a corresponding housing 60 of a rotating part of the regulation device.

The regulation device also comprises suitable means acting to transform the selection indication into effective enabling of filling of a selected combination of tanks.

Said means for enabling the filling of a chosen combination of tanks comprises a part fixed to the frame of the machine for washing and a part which is mobile in relation to the fixed part, denoted overall by the respective reference numerals 62 and 64.

More particularly, the fixed support part 62 has a respective peripheral circular surface suitable for supporting in a rotating manner the mobile part by means of a respective peripheral circular surface arranged coaxially to said peripheral surface of the first part.

From the embodiment shown, it can be seen that the support surface of the mobile part is advantageously housed inside the support surface of the fixed part, however an opposite arrangement with the fixed part inside the mobile part could also be foreseen.

As referred previously, the mobile part 64 is connected for its rotation to said selection means 46. For this purpose said mobile part has a central front sleeve 66 wherein said engaging housing 60 for the rotation stem 56 is formed.

The fixed part has, between said peripheral surface of the fixed part and said peripheral surface of the mobile part, appropriate means, more particularly a substantially annular element 68 in an elastic material, extending peripherally and acting to push radially and form a seal between the same surfaces of the fixed part and of the mobile part of the device.

Obviously these sealing means could also have a different number of elements and arrangement from that of the single elastic ring 68 shown in the present preferred embodiment.

So that pre-defined angular positions of the mobile part correspond to a respective combination of feeding comprising one or more of said tanks so as to form said chosen flow of regeneration water, said mobile and fixed parts are provided with reciprocally matching control parts.

Moreover the matching means on the mobile part and on the fixed part are in the form of passages and portions of closure of said passages which can be connected one to the other to define a plurality of conditions of interconnection corresponding to respective combinations of feeding and such as to define a number of working positions of the means for enabling filling equal to the number of the pre-defined feed combinations.

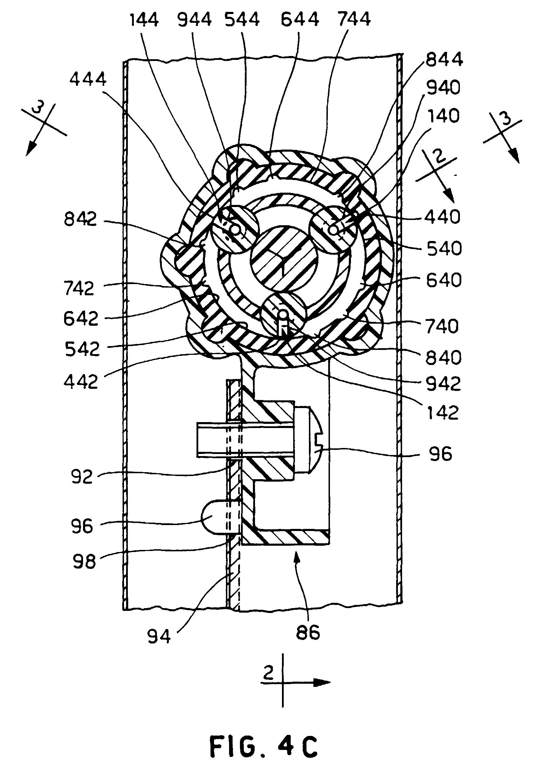

As can be seen in particular in Figure 4C, to the advantage of simple and economical construction, the matching parts on the mobile part are solely in the form of passages 140, 142, 144, while the matching parts on the fixed part comprise both passages and portions of closure for the passages on the mobile part, arranged in such a way that each setting of the selection means corresponds to the interconnection between the passages of the mobile part and of the fixed part corresponding to the chosen feed combination.

More particularly on the fixed part the reference numerals 440, 640, 740, 840 denote respectively the passages of activation of the first tank 40, and the reference numeral 540 the portion of closure and deactivation of the same tank 40, the reference numerals 442, 542, 642 denote respectively the portions, placed one after the other on a single arched segment, of closure and de-activation of the second tank 42 and the reference numerals 742 and 842 the passages of activation of the second tank 42, and finally reference numerals 444 and 744 denote the portions of closure and de-activation of the third tank 44 respectively and the reference numerals 544, 644 and 844 denote the passages of activation of the same third tank 44.

In the preferred embodiment shown, to allow savings in space, the tanks to be selected for filling are, advantageously, lower in number than the required feed combinations.

As already referred previously, according to the preferred embodiment shown, the tanks 40, 42, 44 for the regeneration water are three in number, while, as denoted by numbers 48, the feed combinations are five in number.

This allows, for example, provision of a first tank 40 having a containing volume capable of supplying a first regeneration water flow, a second tank 42 having a containing volume capable of supplying a second regeneration water flow and a third tank having a containing volume capable of supplying a third regeneration water flow. As will be described in greater detail further on, said combinations of tanks to be discharged can be composed of a single tank of said plurality of tanks, a pair of tanks chosen from said plurality of tanks, and all the tanks of the plurality of tanks.

The aforementioned interconnections between the passages of the fixed part and those of the mobile part have the task of connecting said tanks to the atmosphere in order to cause filling of the chosen tanks. For this purpose said passages for enabling filling on the mobile part communicate with respective tanks of said plurality of tanks by means of corresponding hoses 240, 242, 244 which are inserted on the free end part of axial conduits 340, 342, 344 of the passages for enabling filling on the mobile part, which axial conduits extend to the rear beyond the rear edge of the fixed part 62 of the device so as to facilitate the operation of attachment of said hoses (as shown in Figures 2 and 3).

As indicated in Figure 1, the hoses 240, 242, 244 for connection of the passages of the mobile part to the respective tanks are inserted with the other end on the upper nozzles 40', 42', 44' of the tank support block 14 in order to discharge into the upper part of the respective tanks. In this way if said tank is maintained isolated from the atmosphere, the air which remains trapped in the tank prevents entry of filling water and the tank remains empty and not available for the supply of regeneration water, while, contrary, should the upper part of the tanks be placed, by means of the present device, in communication with the atmosphere, any trapping of air is avoided and the tank is filled with water. Said water contained in the tank is then discharged towards the container of the regeneration salts 36 when opening of the solenoid valve 32 is actuated.

As is particularly clear in Figure 4C, said passages 140, 142, 144 for enabling the filling on the mobile part comprise openings which open at the end of secondary conduits 940, 942, 944, branching off radially from the corresponding axial conduits 340, 342, 344 of the passages for enabling filling. Said end openings of the secondary conduits 940, 942, 944 discharge at said elastic means for radial pressure and seal 68. Said secondary conduits 940, 942, 944 branch off from the corresponding axial conduits 340, 342, 344 at the axial end of the latter which is opposite the free one for attachment of the respective connection hoses to the tanks.

It can also be noted that said passages for enabling filling 140, 142, 144 on the mobile part are angularly equidistant one from the other through 120°.

Moreover, advantageously, said passages for enabling discharge on the fixed part are grooves formed at the internal slide edge of said elastic seal means.

As is particularly clear in Figures 2 and 3, said grooves defining the passages for enabling discharge on the fixed part extend axially along the whole length of the seal means, opening towards the atmosphere at one of the longitudinal ends at least of the elastic means.

Obviously other preferred embodiments could also comprise other configurations of said passages for enabling filling on the fixed and mobile parts, as also a different number of the same passages and of the portions of closure in order to be able to activate a lower or higher number of tanks than those of the preferred embodiment shown here. According to a further feature, means are provided for connection between said seal means and said actual fixed part of the selection means in such a way as to prevent relative rotation of the seal means in relation to said fixed part.

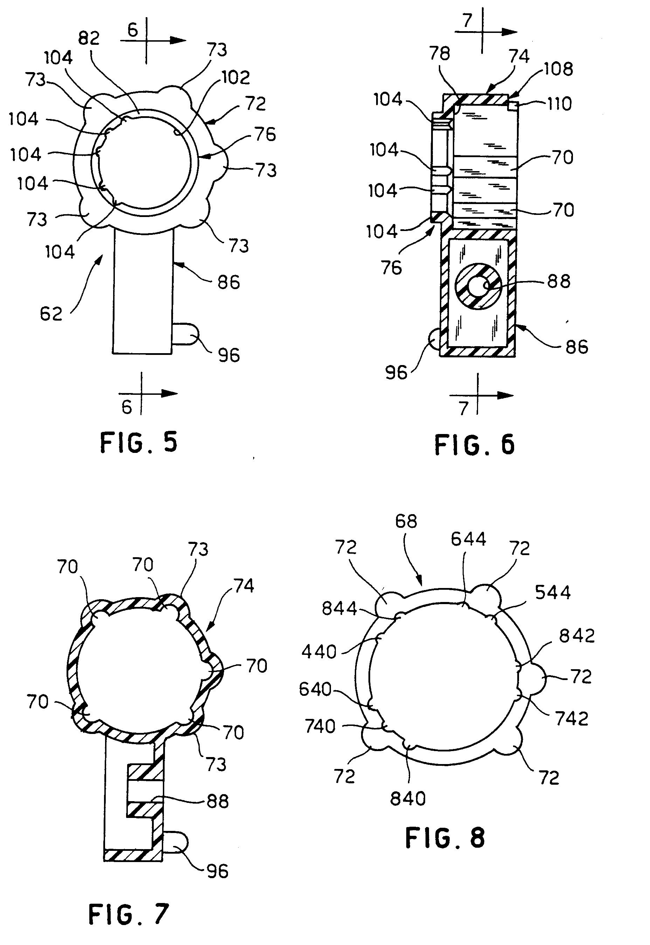

As shown in particular in Figures 7 and 8, said means of connection between said seal means and said fixed part of the selection means comprise, on said actual fixed part, that is to say the part for support of the fixed part, at the respective surface of coupling with the seal means, a plurality of recesses 70 and, on said seal means, a plurality of protuberances 72 for insertion in the corresponding recesses 70 in said fixed part. To make this plurality of these coupling means more reliable, it could also be foreseen to use a different number of protuberances and recesses from those shown and even also equal to a single protuberance-recess pair. Moreover, even if the fact of providing said protuberances on the sealing ring has the advantage of not weakening excessively the resistant section, the provision of protuberances on the fixed part and recesses on the mobile part could also be foreseen.

As is clear from the figures said recesses 70 and the corresponding protuberances 72 project in a radial direction and are angularly distanced one from the other.

According to a further preferred embodiment it could also be foreseen to have said seal means form a single part with said fixed part. This can be achieved by moulding the actual fixed part in a plastic material together and simultaneously with the internal part in an elastic material so that the latter are substantially cast one in the other and thus the need to use said protuberances and recesses is eliminated.

As is particularly clear in Figures 5 to 7, said fixed part 62 of the device comprises a body 74 with a general cylindrical configuration with radial extensions 73 at the respective recesses 70, which body 74 is hollow internally and open at both ends so as to receive by insertion within its interior said mobile part 64 of a smaller diameter.

Said body 74 of the fixed support part 62 has a shank 76 of reduced diameter forming an internal annular shoulder 78 against which said elastic sealing ring 68 rests with one of its front end edges, as shown in Figures 2 and 3. Such a configuration allows a further increase in the hermetic seal between the actual fixed part and the mobile part.

Moreover, in order to guarantee a strong grip in an axial direction between the mobile part and the fixed part of the device, said mobile part also has small front transverse teeth 80, at the end of small axial rods 81, which engage, during use, with the front transverse edge 82 of said front shank 76 and a radially projecting annular portion 84 engaging, lightly yet effectively, with the innermost band turned towards the rear part, of said internal annular shoulder 78 of the shank 76, in order to restrain between them said shank 76 and guarantee the grip in an axial direction with the possibility of rotation.

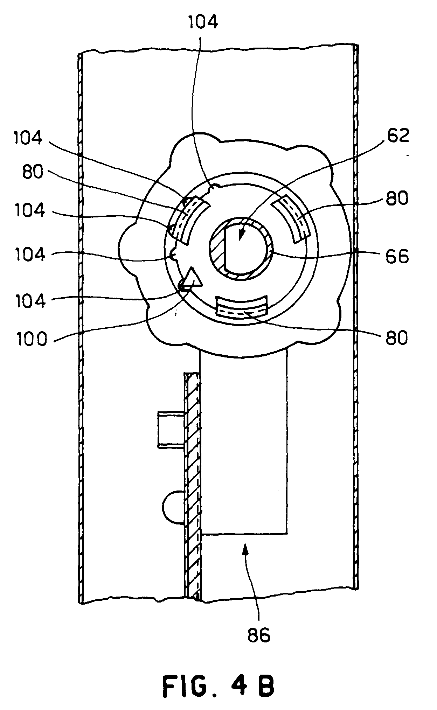

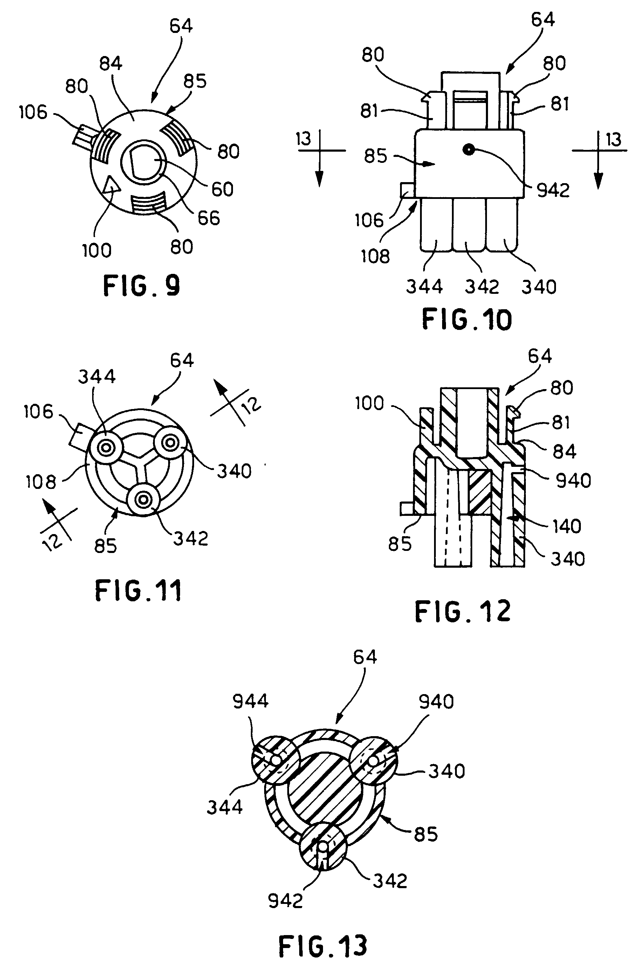

As shown particularly in Figures 4B and 9, in the embodiment shown said teeth 80 are three in number and are angularly distanced by 120° one from the other.

As shown in Figures 9 to 13, said annular portion 84 is the front face of a circular portion 85 which supports said conduits 340, 342, 344 for attachment of the connection hoses to the tanks and whose external circumferential surface forms the surface for engagement with said elastic means 68.

For disengaging of the mobile part from the fixed part it is therefore sufficient to remove the plaque 46 and relevant stem 56 from the mobile part 64 and then disengage the hooking teeth 80 by slight pressure on the same in a radial direction and proceed with withdrawing the mobile part by a traction action towards the rear part.

Removal of the elastic annular seal element 68 consequently takes place by simple disengaging of the recessed and protuberant portions 70, 72 for reciprocal engagement between the elastic ring and the cylindrical portion of the fixed part.

The arrangement of the enabling means of the present device is particularly advantageous Since the passages and portions of closure of the passages, reciprocally matching one in relation to the other, are provided on the mobile part and on the removable seal means, the number of tanks which can be governed by the present device can be changed by simply providing a new mobile part and a new seal ring having appropriate reciprocal matching parts without requiring any modification to the actual fixed part 62. In this way it is possible to provide a series of regulation devices suitable for governing a respective number of tanks, which use the same fixed part. A considerable saving is obtained in the production costs due to the fact of having to provide only one mould for the fixed part which is valid for all possible versions of the device.

As shown in the figures, for attachment of the device to the machine for washing, said fixed part has a joining block 86 extending transversely to said hollow cylindrical part 74, which is provided with a hole 88 for insertion of an attachment screw 90 which, as shown, is inserted in a threaded hole 92 of a median plate 94 of the machine. To prevent rotation of the block, the latter also has a pin 96 inserted in a corresponding hole 98 of said median plate 94.

As shown especially in Figure 4B, said mobile part 64 also has a rod 100, extending in an axial direction and with a triangular section which slides on the internal circumferential surface 102 of the shank 76 and engages during use with recessed notches 104 on the same surface of the shank to achieve precise positioning of the mobile part in the predefined working positions.

Said mobile part also has a fin 106 extending in a transverse direction towards the outside starting from the rear edge 108 of the mobile part 64 and such as to engage with stop surfaces, of which only one, 110, is shown in Figure 6, on the fixed part 62, which are angularly distanced one from the other to restrict the amplitude of angular rotation of the mobile part within the fixed part.

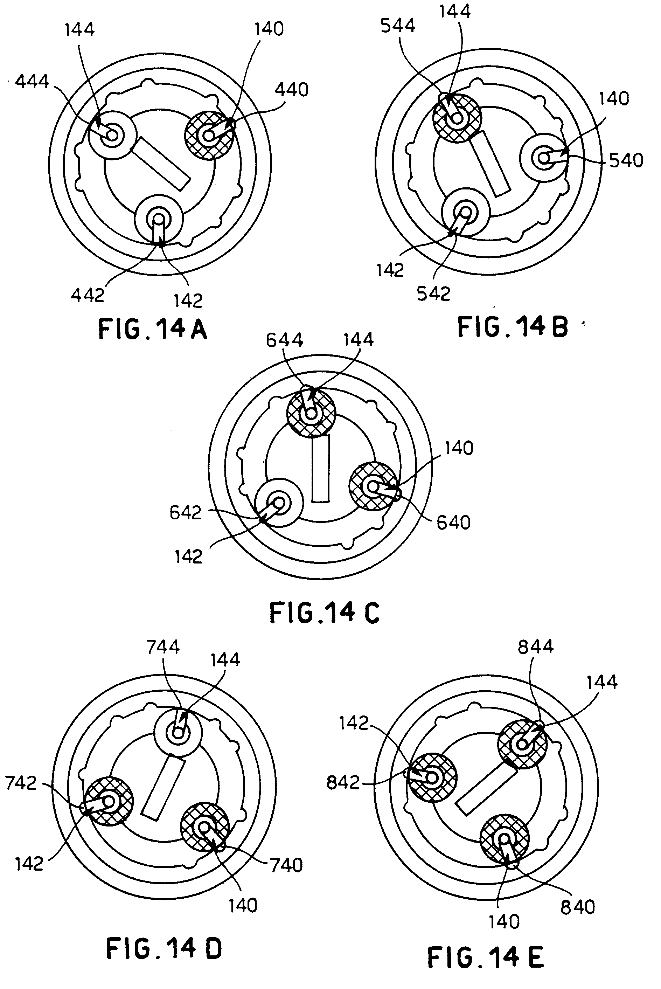

With reference to Figures 14A, 14B, 14C, 14D and 14E it is possible to indicate operation of the present device.

A first working position is shown in particular in Figure 14A. For this position only the first conduit 140 is in a condition of interconnection and therefore enables filling of the correspondingly connected first tank 40. In fact the conduit 140 of the same is placed to correspond to the groove 440, while the other conduits 142 and 144 for control of the other tanks correspond to closure portions 442 and 444.

A second working position is shown in Figure 14B. For this position only the third conduit 144 is in a condition of interconnection and therefore enables filling of the correspondingly connected third tank 44. In fact the conduit 144 of the same is placed to correspond to the groove 544, while the other conduits 140 and 142 of the other tanks correspond to closure portions 540 and 542.

A third working position is shown in Figure 14C. For this position only the first and third conduits 140 and 144 are in a condition of interconnection and therefore enable filling of the correspondingly connected first and third tanks 40 and 44. In fact the first conduit 140 is placed to correspond to the groove 640 and the third conduit 144 is placed to correspond to the groove 644, while the other conduit 142 of the remaining second tank 42 corresponds to the relevant closure portion 642.

A fourth working position is shown in Figure 14D. For this position only the first and second conduits 140 and 142 are in a condition of interconnection and therefore enable filling of the correspondingly connected first and second tanks 40 and 42. In fact the first conduit 140 is placed to correspond to the groove 740, and the second conduit 142 is placed to correspond to the groove 742, while the other conduit 144 of the remaining third tank 44 corresponds to the respective closure portion 744.

Finally the fifth and last working position is shown in Figure 14E. For this position all the conduits 140, 142 and 144 are in a condition of interconnection and therefore enable filling of the correspondingly connected tanks 40, 42 and 44. For this purpose the first conduit 140 is placed to correspond to the groove 840, the second conduit 142 is placed to correspond to the groove 842 and the third conduit 144 is placed to correspond to the groove 844.

The mobile part and the fixed part are preferably made in a plastic material and are obtained in the form of moulded parts.

It must obviously be understood that what has been written and shown with reference to the preferred embodiment of the present invention has been given purely by way of a non-limiting example of the principle claimed.

## Claims

1. Device for the regulation of quantities of water used for the regeneration of ion-exchange resins for softening water, which can preferably be used in a machine for washing such as a dishwasher machine, the device being connected to a plurality of tanks for feeding a respective quantity of water which can be filled and discharged to form a flow of water intended for regeneration of said ion-exchange resins, characterised in that it comprises means for the selection of a pre-defined flow of water to be supplied to said ion-exchange resins, means acting to enable filling of a combination of tanks (40, 42, 44) which can be selected from among a plurality of combinations of tanks, (40, 42, 44) said means for enabling the filling of a combination of tanks comprising a fixed part (62) having a respective peripheral surface and a mobile part (64) having a respective peripheral surface and arranged coaxially to said peripheral surface of the first part, said mobile part (64) being supported rotatingly by said fixed part (62) and connected for its rotation to said selection means; said mobile (64) and fixed (62) parts having reciprocal matching parts in such a way that pre-defined angular positions of the mobile part (64) correspond to a respective feed combination comprising one or more of said tanks (40, 42, 44) so as to form said chosen regeneration water flow and wherein the fixed part (62) of the device comprises means extending peripherally between said peripheral surface of the fixed part (62) and said peripheral surface of the mobile part (64) and acting to push radially and create a seal between the same.

2. Device according to claim 1, characterised in that the tanks (40, 42, 44) are lower in number than the feed combinations required and in that the matching parts on the mobile part (64) and on the fixed part (62) define a number of working positions of the means for enabling filling equal to the number of the pre-defined feed combinations.

3. Device according to any one of the previous claims, characterised in that the matching parts on the mobile part (64) are passages (140, 142, 144) and the matching parts on the fixed part (62) comprise passages (440, 640, 740, 840, 742, 842, 544, 644, 844) and portions (540, 442, 542, 642, 444, 744) of closure for the passages (140, 142, 144) on the mobile part (64) so that each setting of the selection means corresponds to the interconnection between the passages (140, 142, 144) of the mobile part (64) and passages (440, 640, 740, 840, 742, 842, 544, 644, 844) of the fixed part (62) corresponding to the chosen feed combination.

4. Device according to any one of the previous claims, characterised in that said connections between the passages (440, 640, 740, 840, 742, 842, 544, 644, 844) of the fixed part (62) and those (140, 142, 144) of the mobile part (64) connect said tanks (40, 42, 44) with the atmosphere to cause filling of the chosen tanks (40, 42, 44).

5. Device according to any one of the previous claims, characterised in that said passages (140, 142, 144) for enabling filling on the mobile part (64) each communicate with a respective tank (40, 42, 44) of said plurality of tanks (40, 42, 44).

6. Device according to any one of the previous claims, characterised in that said passages (140, 142, 144) for enabling filling on the mobile part (64) comprise openings which open on the external slide edge of said mobile part (64) at said elastic means of radial pressure and seal.

7. Device according to any one of the previous claims, characterised in that said passages (140, 142, 144) for enabling filling on the mobile part (64) extend into respective axial conduits (340, 342, 344) for attaching of connection means to the respective tanks (40, 42, 44).

8. Device according to claim 7, characterised in that said openings of the passages (140, 142, 144) for enabling are formed by means of respective secondary conduits (940, 942, 944) branching off radially from the corresponding axial conduits (340, 342, 344) of the passages (140, 142, 144) for enabling filling at the opposite axial end to the free one of attachment of said connection means.

9. Device according to claim 7, characterised in that said axial conduits (340, 342, 344) of the passages (140, 142, 144) for enabling filling of the mobile part (64) extend at the rear beyond the rear edge of the fixed part (62) of the device.

10. Device according to any one of the previous claims, characterised in that said passages (140, 142, 144) for enabling filling on the mobile part (64) are angularly equidistant one from the other.

11. Device according to any one of the previous claims, characterised in that said passages (440, 640, 740, 840, 742, 842, 544, 644, 844) for enabling filling on the fixed part (62) are in the form of grooves formed at the internal slide edge for the mobile part (64) of said elastic seal means.

12. Device according to claim 11, characterised in that said grooves for enabling filling on the seal means extend axially along the whole length of said seal means, opening towards the atmosphere at one of the longitudinal ends at least of the seal means.

13. Device according to any one of the previous claims, characterised in that said connection means for connecting the passages (140, 142, 144) of said mobile regulation part (64) to said tanks (40, 42, 44) for containing the regeneration water, comprise a plurality of connection hoses (240, 242, 244) each discharging into the upper part of a respective tank (40, 42, 44) in such a way that communicating with the atmosphere of the respective tanks (40, 42, 44) causes the filling of the latter (40, 42, 44) with the chosen quantity of regeneration water.

14. Device according to any one of the previous claims, characterised in that means are provided for connection between said seal means and said fixed part (62) of the selection means in such a way as to prevent relative rotation of the seal means in relation to said fixed part (62).

15. Device according to any one of the previous claims, characterised in that said seal means form one single part with said fixed part (62).

16. Device according to claim 14, characterised in that connection means comprise, between said seal means and said fixed part (62) of the selection means, on said fixed part (62) at the respective coupling surface, one or more recesses (70) and, on said seal means, one or more protuberances (72) for insertion in corresponding recesses (70) of said fixed part (62) or vice versa.

17. Device according to claim 16, characterised in that said protuberances (72) the corresponding recesses (70) are angularly distanced one from the other.

18. Device according to any one of claims 16 to 17, characterised in that said protuberances (72) and recesses (70) extend in a radial direction.

19. Device according to any one of the previous claims, characterised in that said seal means comprise an annular element (68) in an elastic material.

20. Device according to any one of the previous claims, characterised in that said selection means comprise an actuation portion (46) attached in a front zone (50) of the frame of the machine for washing.

21. Device according to any one of the previous claims, characterised in that the fixed part (62) has an annular shoulder (78) arranged transversely and against which said elastic sealing (68) ring rests with one of its end transverse edges.

22. Device according to any one of the previous claims, characterised in that said fixed part (62) comprises a body (74) of general cylindrical configuration, which body (74) is internally hollow and open at both ends so as to receive by insertion in its interior said mobile part (64) of a smaller diameter.

23. Device according to claim 22, characterised in that said body (74) of the fixed part (62) has a cylindrical shank (76) of small diameter forming said internal annular shoulder (78) against which said elastic sealing ring (68) rests.

24. Device according to claim 23, characterised in that said mobile part (64) has small front transverse teeth (80) which engage with the front transverse edge of said front shank (76) and an annular portion (84) projecting radially and engaging with said rear annular shoulder (78) of the shank (76), in such a way as to restrain said shank (76) between them and ensure the grip in an axial direction.

25. Device according to claim 22, characterised in that, for attachment of the device, said fixed part (62) has a joining block (86) extending transversely to said hollow cylindrical body (74) and which has a hole (88) for insertion of an attachment screw (90), as well as an insertion pin (96) suitable for preventing rotation of the block of said joining block (86).

26. Device according to claim 23, characterised in that said mobile part (64) has a rod (100) extending in an axial direction which slides on the internal circumferential surface of the shank (76) and engages during use with recessed notches (104) on the same surface of the shank (76) to achieve positioning of the mobile part (64) in the predefined working positions.

27. Device according to any one of the previous claims, characterised in that said mobile part (64) has a fin (106) extending in a transverse direction towards the outside from the rear edge of the mobile part (64) and such as to engage with stop surfaces (110) on the fixed part (62) which are angularly distanced to restrict angular rotation of the mobile part (64).
